# EUROPÄISCHE PATENTSCHRIFT

(11) **EP 3 265 617 B1**
(45) Veröffentlichungstag und Bekanntmachung des Hinweises auf die Patenterteilung: **26.02.2020**
(21) Anmeldenummer: 16707134.9
(22) Anmeldetag: 01.03.2016
(51) Int. Cl.: E03C 1/05, G05D 23/13, E03C 1/04

(54) **ELEKTRONISCH GESTEUERTE SANITÄRARMATUR**
ELECTRONICALLY CONTROLLED SANITARY DEVICE
ROBINETTERIE À COMMANDE ÉLECTRONIQUE

(30) Priorität: 04.03.2015 EP 15157630
(43) Veröffentlichungstag der Anmeldung: 10.01.2018
(73) Patentinhaber: Franke Water Systems AG, 5726 Unterkulm (CH)
(72) Erfinder: BRUNNER, Stefan, 5040 Schöftland (CH); GLOOR, Roland, 5732 Zetzwil (CH); KNUPFER, Daniel, 7000 Chur (CH); KNUPFER, Thomas, 7000 Chur (CH)
(74) Vertreter: Lemcke, Brommer & Partner Patentanwälte Partnerschaft mbB
(86) Internationale Anmeldenummer: PCT/EP2016/054330
(87) Internationale Veröffentlichungsnummer: WO 2016/139206

(56) Entgegenhaltungen:
- WO-A1-2004/081300
- DE-A1- 10 347 822
- DE-U1- 20 308 906
- US-B1- 8 627 850

## Beschreibung

Die vorliegende Erfindung betrifft eine Sanitärarmatur gemäss dem Obergriff des Anspruchs 1.

Eine Sanitärarmatur dieser Art ist aus dem Dokument WO 2004/081300 A1 bekannt. Sie weist eine Ventilbatterie mit einem Kaltwassereinlass und einem Warmwassereinlass sowie einem Mischwasserauslass auf. Dieser ist mit einem Wasserauslauf verbunden, durch welchen das Wasser, beispielsweise in ein Waschbecken ausläuft. Eine mit einer Energieversorgung verbundene Sensoreinheit umfasst mindestens einen Näherungssensor, wobei dieser beim Eindringen einer Person in den Detektionsbereich des Näherungssensors ein Aktionssignal an eine mit der Sensoranordnung und der Ventilbatterie verbundene elektronische Steuerung abgibt. Das Aktionssignal unterscheidet sich im Potenzial und/oder der Qualität von einem Ruhesignal, welches der Näherungssensor ohne Einwirkung einer Person abgibt. Die Steuerung bringt die Ventilbatterie - mittels Erfassen und Verarbeiten einer bestimmten Anzahl Aktionssignale oder durch ein Aktivieren des Sensors über eine Zeitdauer - in eine diesen Signalen entsprechende Stellung, wodurch Wasser einer vorbestimmten Temperatur und/oder mit einem vorbestimmten Flusswert dem Wasserauslauf zugeführt wird. Diese Sanitärarmatur ist kompliziert zu bedienen und intuitiv praktisch nicht bedienbar.

Die US8627850B1 zeigt eine Sanitärarmatur, bei der motorisch betätigten Ventilen für Warm- und Kaltwasser, die über ein Bedienteil mit elektronischer Steuerung betätigt werden. Auf einem Display des Bedienteils können separate Schieber für Kalt- und Warmwasser angezeigt werden. Die Schieberstellung wird jedoch über separate Bedienknöpfe verändert. Außerdem können Temperatur und Wassermenge nicht unabhängig voneinander reguliert werden.

In der DE 103 47 822 A1 ist eine Zweigriffwassermischarmatur gezeigt, bei der separate Kalt- und Warmwasserventile mittels konzentrisch übereinander angeordnete ringförmige Betätigungseinrichtungen bedient werden können, die jeweils einen radial vorstehenden Betätigungsgriff aufweisen. Durch eine Schwenkbewegung der Betätigungsgriffe kann die Kalt- bzw. Warmwassermenge eingestellt und somit aus dem freigegebenen Kaltwasser und Warmwasser temperiertes Mischwasser erzeugt werden. Eine besonders intuitive Bedienung ist durch die gezeigte Armatur nicht gegeben.

Es ist deshalb eine Aufgabe der vorliegenden Erfindung, die bekannte Sanitärarmatur derart weiterzubilden, dass sie einfach und intuitiv bedienbar ist.

Diese Aufgabe wird mit einer Sanitärarmatur gelöst, welche die Merkmale des Anspruchs 1 aufweist.

Die erfindungsgemässe Sanitärarmatur weist einen Wasserauslauf, eine Ventilbatterie, einen Bedienteil mit einer Sensoranordnung und eine elektronische Steuerung auf.

Die elektrisch gesteuerte Ventilbatterie ist mit einem Kaltwassereinlass zum Anschliessen an eine Kaltwasserspeiseleitung, einen Warmwassereinlass zum Anschliessen an eine Warmwasserspeiseleitung und einen mit dem Wasserauslauf strömungsverbundenen Mischwasserauslass versehen. Die elektronische Steuerung steuert aufgrund von elektrischen Signalen der Sensoranordnung die Ventileinheit an, wodurch Kaltwasser, Warmwasser oder Mischwasser mit einem gewünschten Durchflusswert und/oder mit einer gewünschten Temperatur dem Wasserauslauf zugeführt wird.

Der Bedienteil weist einen Temperaturschieber auf, welcher von Hand entlang einer ersten Bewegungsbahn hin und her bewegbar ist. Weiter weist der Bedienteil einen Durchflussschieber auf, welcher entlang einer zweiten Bewegungsbahn von Hand hin und her bewegbar ist. Die Sensoranordnung weist einen stationär angeordneten ersten Sensor und einen ebenfalls stationär angeordneten zweiten Sensor auf. Der erste Sensor erzeugt in Abhängigkeit vom Ort des Temperaturschiebers ein entsprechendes elektrisches Temperatursignal und der zweite Sensor erzeugt in Abhängigkeit vom Ort des Durchflussschiebers ein entsprechendes elektrisches Durchflusssignal. Die Steuerung steuert aufgrund dieses Temperatursignals und dieses Durchflusssignals die Ventilbatterie an.

Dadurch, dass die Bedienelemente in Form eines Temperaturschiebers und eines Durchflussschiebers voneinander getrennt sind, ist die erfindungsgemässe elektrisch gesteuerte Sanitärarmatur äusserst einfach und intuitiv, somit benutzerfreundlich bedienbar.

Zur Anwendung geeignete Ventilbatterien und deren Ansteuerung mittels einer elektronischen Steuerung sind allgemein bekannt, beispielsweise auch aus dem Dokument WO 2004/081300 A1.

Bevorzugt weist der erste Sensor einen Hall-Sensor und der Temperaturschieber einen Permanentmagneten auf, welcher mit dem Hall-Sensor zusammenwirkt. Entsprechend weist der zweite Sensor bevorzugt ebenfalls einen (eigenen) Hall-Sensor und der Durchflussschieber ebenfalls einen (eigenen) Permanentmagneten auf, welcher mit diesem Hall-Sensor zusammenwirkt.

Hall-Sensoren sind allgemein bekannt. Wird ein Hall-Sensor von einem Strom durchflossen und in ein senkrecht dazu verlaufendes Magnetfeld gebracht, liefert er eine Ausgangsspannung, die proportional zum Produkt aus magnetischer Feldstärke und Strom ist. Entsprechend sind der Permanentmagnet des Temperaturschiebers und der Permanentmagnet des Durchflussschiebers derart angeordnet, dass das von ihnen erzeugte Magnetfeld möglichst rechtwinklig zum elektrischen Strom im Hall-Sensor verläuft. Je näher eine Permanentmagnet zum zugeordneten Hall-Sensor kommt, umso grösser ist die auf den Hall-Sensor einwirkende magnetische Feldstärke und entsprechend das durch diesen erzeugte Temperatursignal beziehungsweise Durchflusssignal.

Bevorzugt weist der erste Sensor mehrere Hall-Sensoren auf, welche in einer Reihe in Richtung der ersten Bewegungsbahn hintereinander angeordnet sind. Entsprechend weist der zweite Sensor bevorzugt ebenfalls mehrere (eigene) Hall-Sensoren auf, welche ihrerseits in einer Reihe in Richtung der zweiten Bewegungsbahn hintereinander angeordnet sind.

Durch diese Ausgestaltung kann die Länge der ersten Bewegungsbahn beziehungsweise der aktive Bewegungsbereich des Temperaturschiebers und die Länge der zweiten Bewegungsbahn beziehungsweises der aktive Bewegungsbereich des Durchflussschiebers gegenüber einer Ausführungsform mit je nur einem Hall-Sensor vergrössert werden. Überdies ermöglicht die Ausführungsform mit je einer Reihe von Hall-Sensoren eine Abstufung der gewünschten Wassertemperatur und des gewünschten Wasserdurchflusses, indem jeder Stufe ein eigener Hall-Sensor zugeordnet ist.

Bevorzugt ist für nur Kaltwasser kein Hall-Sensor vorgesehen, sodass die Steuerung auch kein Temperatursignal erhält und somit diese die Ventilbatterie derart ansteuert, dass ausschliesslich Kaltwasser zum Mischwasserauslass fliessen kann.

Entsprechend bevorzugt ist der Stellung des Durchflussschiebers, bei welcher kein Wasser fliessen soll, d.h. einer Aus-Stellung, kein Hall-Sensor zugeordnet. Entsprechend erhält die Steuerung kein Durchflusssignal, wodurch diese die Ventilbatterie derart ansteuert, dass weder Kaltwasser noch Warmwasser vom betreffenden Einlass zum Mischwasserauslass fliessen kann.

Bevorzugt weist die Sanitärarmatur eine elektronische Schaltung auf, welche einerseits mit der Steuerung und andererseits mit den Hall-Sensoren verbunden ist. Diese elektronische Schaltung speist jeden der Hall-Sensoren mit einem definierten Strom. Weiter wird bevorzugt die jedem Hall-Sensor abgegriffene Spannung ebenfalls dieser Schaltung zugeführt, welche diese Spannungen verstärkt und als Temperatursignal beziehungsweise Durchflusssignal an die Steuerung abgibt. Selbstverständlich ist es alternativ auch denkbar, dass die Komponenten der elektronischen Schaltung in die Steuerung integriert sind.

In bevorzugter Weise weist der Bedienteil eine Wand auf. Entlang der einen Seite dieser Wand sind der Temperaturschieber und der Durchflussschieber bewegbar. Der erste und der zweite Sensor sind auf der anderen Seite der Wand angeordnet. Dadurch werden einerseits die Sensoren von Umgebungseinflüssen geschützt und andererseits wird verhindert, dass allenfalls mit den Schiebern mitbewegte Verunreinigungen die Sensoren beschädigen können.

Bevorzugt sind die Führungsbahnen für den Temperaturschieber und den Durchflussschieber an der Wand ausgebildet. Die Führungsbahnen können beispielsweise an der Wand schwalbenschwanzförmig ausgebildet sein. Die Wand wird vorzugsweise als Kunststoff Spritzgussteil hergestellt.

Bevorzugt liegt die Wand wenigstens annähernd in einer horizontalen Ebene und sind die Führungen auf der Unterseite der Wand ausgebildet. Dies verhindert die Anlagerung von Schmutz in den Führungen.

Bevorzugt sind der Wasserauslauf und der Bedienteil einem gemeinsamen Armaturengehäuse zugeordnet. Es ist jedoch auch möglich, dass der Wasserauslauf an einem eigenen Auslaufgehäuse angeordnet ist, während der Bedienteil in beziehungsweise an einem separaten Bediengehäuse angeordnet ist.

Bevorzugt befinden sich die elektronische Steuerung und die Ventilbatterie ausserhalb dieser Gehäuse. Falls jedoch eine weiter oben erwähnte elektronische Schaltung vorhanden ist, ist diese bevorzugt im Armaturengehäuse beziehungsweise Bediengehäuse angeordnet.

Sind dem Wasserauslauf und dem Bedienteil ein gemeinsames Armaturengehäuse zugeordnet, weist dieses bevorzugt einen Sockelteil sowie einen separaten, am Sockelteil befestigten Kopfteil auf. Dem Kopfteil ist ein in sich geschlossenes Dichtelement zugeordnet, welches das Eindringen von Flüssigkeit und Schmutz in das Innere des Armaturengehäuses insbesondere des Kopfteils verhindert. Die Sensoranordnung ist auf der Innenseite des Kopfteils und somit im Innern des Armaturengehäuses und der Temperaturschieber sowie der Durchflussschieber sind auf der der Umgebung zugewandten Aussenseite des Kopfteils und somit des Armaturengehäuses angeordnet.

Bevorzugt weist der Kopfteil eine untere Abdeckplatte auf, welche mit dem Dichtelement zusammenwirkt und den Kopfteil gegen unten abschliesst.

Die Wand ist bevorzugt durch ein Führungselement gebildet, an welchem der Temperaturschieber und der Durchflussschieber geführt sind. Bevorzugt ist das Führungselement in eine obere Abdeckung des Kopfteils, umfangsseitig dichtend eingesetzt. Bei dieser letzgenannten Ausführungsform wirkt das Dichtelement bevorzugt mit dem Führungselement zusammen.

Bevorzugt weist die Sanitärarmatur eine Temperaturbegrenzung auf, welcher verhindert, dass Mischwasser mit einer Temperatur ausfliessen kann, welche höher ist als eine vorbestimmte, gewünschte Mischwassertemperatur.

So ist es möglich, dass die Temperaturbegrenzung den Weg des Temperaturschiebers begrenzt. Es ist auch möglich, dass die Temperaturbegrenzung in die elektronische Steuerung integriert ist. Weiter ist es möglich, die Mischwassertemperatur mittels eines Thermostaten zu überwachen.

Es ist möglich, die Aus-Stellung des Durchflussschiebers wenigstens annähernd in der Längsmitte der zweiten Bewegungsbahn vorzusehen. Der Durchflussschieber ist, ausgehend von der Aus-Stellung, in beiden entgegengesetzten Richtungen bewegbar. Die elektronische Steuerung steuert, aufgrund des vom zweiten Sensor erhaltenen Durchflusssignals, die Ventilbatterie derart an, dass das Mischwasser dem einen oder andern von zwei Wasserausläufen zugeführt wird. Bevorzugt weist in diesem Fall die Ventilbatterie ein Umstellventil auf, welches das Mischwasser dem gewünschten Wasserauslauf zuleitet.

Bei einer alternativen Ausführungsform werden anstelle von mechanischen Schiebern für Temperatur- und Durchflussmenge virtuelle, mittels einer optischen Anzeige dargestellte Schieber eingesetzt. Der Bedienteil umfasst hierfür mindestens eine optische Anzeige zur Darstellung eines entlang einer ersten Bewegungsbahn hin und her bewegbaren virtuellen Temperaturschiebers sowie eines entlang einer zweiten Bewegungsbahn hin und her bewegbaren virtuellen Durchflussschiebers. Die Sensoranordnung des Bedienteils umfasst einen ersten, entlang der ersten Bewegungsbahn angeordneten Berührungssensor, welcher Fingerberührungen erkennt, die dazu dienen den virtuellen Temperaturschieber mittels einer ersten Berührungsgeste zu verschieben, und welcher in Abhängigkeit von einem Ort entlang der ersten Bewegungsbahn, an dem die erste Berührungsgeste endet, ein entsprechendes elektrisches Temperatursignal erzeugt. Außerdem umfasst die Sensoranordnung einen zweiten, entlang der zweiten Bewegungsbahn angeordneten Berührungssensor, welcher Fingerberührungen detektiert, die dazu dienen, den virtuellen Durchflussschieber mittels einer zweiten Berührungsgeste zu verschieben, und welcher in Abhängigkeit von einem Ort entlang der zweiten Bewegungsbahn, an dem die zweite Berührungsgeste endet, ein entsprechendes elektrisches Durchflusssignal erzeugt. Wie bei der ersten Ausführungsform ist die Steuerung dazu ausgebildet, auf Grund des Temperatursignals und des Durchflusssignals die Ventilbatterie anzusteuern.

Die virtuellen Temperatur- und Durchflussschieber können beispielsweise in Form von Leuchtanzeigen oder als stilisierte, grafisch dargestellte Bedienelemente angezeigt werden. Insbesondere kann die optische Anzeige zusammen mit der Sensoranordnung in Form eines berührungsempfindlichen Displays, eines sogenannten Touchscreens realisiert werden. Die Bedienung erfolgt in diesem Fall durch "Ziehen" des dargestellten Grafiksymbols mit dem Finger über den Touchscreen. Ein solcher Touchscreen kann insbesondere als kapazitiver oder resistiver Touchscreen ausgeführt werden. Insbesondere kann ein solcher Touchscreen dazu ausgebildet sein, Berührungsgesten mit einem Finger zu erkennen.

Berührt ein Benutzer eines der grafisch bzw. optisch angezeigten Bedienelemente, also entweder den virtuellen Temperaturschieber oder den virtuellen Durchflussschieber, und "zieht" dieses durch eine entsprechende Fingerbewegung entlang der zugehörigen Bewegungsbahn, so folgt das angezeigte Grafiksymbol bzw. die Leuchtanzeige der Fingerbewegung bis zu dem Ort, an dem die Berührungsgeste endet. In Abhängigkeit dieses Ortes wird ein entsprechendes Durchfluss- oder Temperatursignal erzeugt, welches zur Ansteuerung der Ventilbatterie dient.

Die Erfindung wird anhand der in der Zeichnung dargestellten Ausführungsformen näher beschrieben. Es zeigen rein schematisch:
- Fig. 1: in perspektivischer Ansicht ein Armaturengehäuse, einer erfindungsgemässen Sanitärarmatur mit einem Wasserauslauf sowie einen Temperaturschieber und einen Durchflussschieber zum Wählen der Wassertemperatur beziehungsweise des Wasserdurchflusses;
- Fig. 2: die in Figur 1 gezeigten Teile der Sanitärarmatur in Frontansicht;
- Fig. 3: die erfindungsgemässe Sanitärarmatur in einem Vertikalschnitt entlang der Linie A-A und in einem Horizontalschnitt entlang der Linie B-B der Figur 2, sowie eine elektronische Steuerung und eine von dieser angesteuerte Ventilbatterie;
- Fig. 4: den in den Figuren 1 und 2 gezeigten Teil der Sanitärarmatur in Draufsicht, wobei mit Doppelpfeilen die Bewegungsbereiche des Temperaturschiebers und des Durchflussschiebers angegeben sind;
- Fig. 5: gegenüber Fig. 3 vergrössert den dort mit V bezeichneten Ausschnitt mit einem Permanentmagneten im Durchflussschieber und diesem zugeordneten Hall-Sensoren;
- Fig. 6: in gleicher Darstellung wie Fig. 1 eine Ausführungsform, bei welcher der Temperaturschieber und der Durchflussschieber entlang geraden Bewegungsbahnen bewegbar sind;
- Fig. 7: in gleicher Darstellung wie Fig. 1 eine Bedienanordnung mit dem Temperaturschieber und dem Durchflussschieber;
- Fig. 8: einen Vertikalschnitt durch die Bedienanordnung;
- Fig. 9: einen Horizontalschnitt durch die Bedienanordnung und die elektronische Steuerung sowie die von dieser angesteuerte Ventilbatterie, wobei von dieser eine Mischwasserleitung zu einem in einem separaten Auslaufgehäuse angeordneten Wasserauslauf führt;
- Fig. 10: einen Horizontalschnitt durch den Kopfteil und die Bedienanordnung entlang der Linie X-X der Fig. 3 mit einem Dichtelement;
- Fig. 11: ein drittes Ausführungsbeispiel für eine Armatur mit Temperatur- und Durchflussschieber;
- Fig. 12: ein viertes Ausführungsbeispiel für eine Armatur mit Temperatur- und Durchflussschieber und
- Fig. 13: ein fünftes Ausführungsbeispiel, bei dem Temperatur- und Durchflussschieber als virtuelle Anzeigeelemente in Form von über Berührungssensoren verschiebbare Leuchtanzeigen ausgeführt sind.

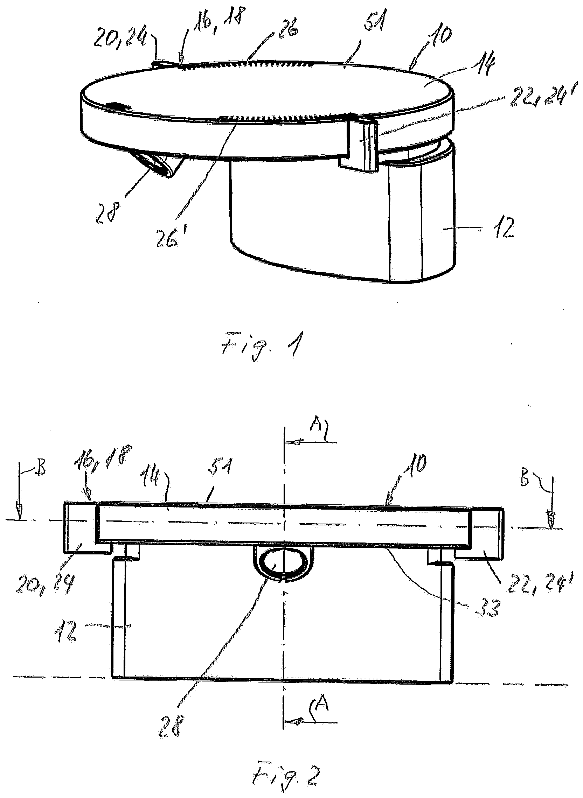

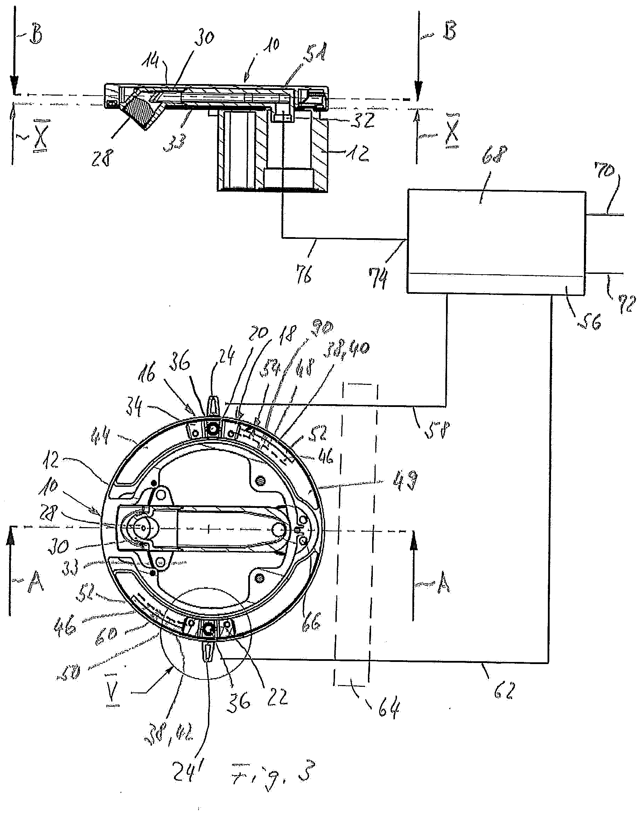

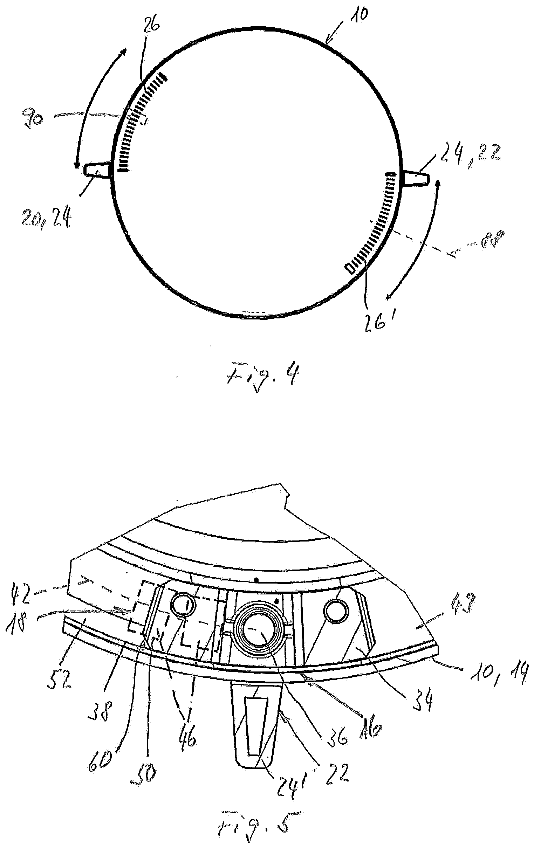

Wie den Fig. 1 und 2 zu entnehmen ist, weist die elektronisch gesteuerte Sanitärarmatur in der hier gezeigten Ausführungsform ein Armaturengehäuse 10 mit einem Sockelteil 12 und einem darauf angeordneten Kopfteil 14 auf. Der Sockelteil 12 ist dazu bestimmt, an einer Unterlage, beispielsweise an einem Waschtisch, befestigt zu werden. Der Kopfteil 14 hat die Form eines Kreiszylinders mit bezüglich des Durchmessers geringer Höhe. An beziehungsweise in ihm ist ein Bedienteil 16 mit einer Sensoranordnung 18 angeordnet, welche im Zusammenhang mit den Fig. 3 und 5 näher zu beschreiben ist.

Der Bedienteil 16 weist einen Temperaturschieber 20 und einen Durchflussschieber 22 auf. Von diesen Schiebern 20, 22 ist in den Fig. 1 und 2 der Betätigungshebel 24 beziehungsweise 24' sichtbar. Die Betätigungshebel 24, 24' sind entlang der Mantelfläche des Kopfteils 14 hin und her bewegbar.

Auf der Oberseite des Kopfteils 14 befindet sich sowohl für den Temperaturschieber 20 als auch für den Durchflussschieber 22 je eine Skalierung 26 beziehungsweise 26'. Diese zeigen auch die Bewegungsbereiche der Betätigungshebel 24, 24' auf, welche in der Fig. 4 mit Doppelpfeilen angedeutet sind. Die beiden Skalierungen 26, 26' sind bezüglich des Kopfteils 14 diametral gegenüberliegend angeordnet.

Der zylinderförmig ausgebildete Sockelteil 12 übernimmt auf der Rückseite die Form des Kopfteils 14, wogegen er auf der Vorderseite abgeflacht ist und etwa bis zur Mitte des Kopfteils 14 reicht. Der Kopfteil 14 ragt somit auf der Vorderseite über den Sockelteil 12 vor und weist auf seiner Unterseite im freiliegenden Endbereich einen Wasserauslauf 28 auf, in welchem bevorzugt ein Strahlregler (Perlator®) angeordnet ist.

Der Vollständigkeit halber sei erwähnt, dass der Sockelteil 12 auf der Rückseite in seinem oberen Endbereich im Querschnitt schulterartig verjüngt ausgebildet ist, um die Bewegung des Temperaturschiebers 20 nicht zu behindern.

Der guten Übersicht halber ist in der Fig. 3 oben das Armaturengehäuse 10 mit seinen Einbauten in einem Vertikalschnitt und unten der Kopfteil 14 in einem Horizontalschnitt dargestellt.

Im Innern des Kopfteils 14 befindet sich ein Strömungselement 30, welches einenends einen in Richtung gegen unten in den Sockelteil 12 hineinragenden Leitungsanschluss 32 und andernends einen schräg nach unten zeigenden Endbereich aufweist, mit welchem das Strömungselement 30 unter dem Kopfteil 14 beziehungsweise eine untere Abdeckplatte 33 des Kopfteils 14 vorsteht und welches den Wasserauslauf 28 bildet.

Dieses kann aus zwei dichtend zusammengefügten Teilen bestehen.

Wie dies insbesondere dem Horizontalschnitt entnehmbar ist, sind der Temperaturschieber 20 und der Durchflussschieber 22 gleich ausgebildet. Ihr Aufbau ist in Figur 5 vergrössert gezeigt. Die beiden Schieber 20, 22 weisen je einen Schlitten 34 auf, welcher mit dem betreffenden Betätigungshebel 24, 24' fest verbunden, bevorzugt mit diesem integral einstückig ausgebildet ist.

In jedem Schlitten 34 ist ein Permanentmagnet 36 angeordnet, dessen Magenfeld an der oben liegenden Stirnseite in vertikaler Richtung verläuft.

Jeder der beiden Schlitten 34 ist in einer eigenen Führung 38, beispielsweise in der Art eines Schwalbenschwanzes, gleitend geführt. Die Führungen 38 definieren eine erste Bewegungsbahn 40 für den Temperaturschieber 20 und eine zweite Bewegungsbahn 42 für den Durchflussschieber 22.

Im gezeigten Ausführungsbeispiel weisen die erste und zweite Bewegungsbahn 40, 42 die Form eines Kreisbogens auf und sie verlaufen koaxial zur Mantelfläche des Kopfteils 14.

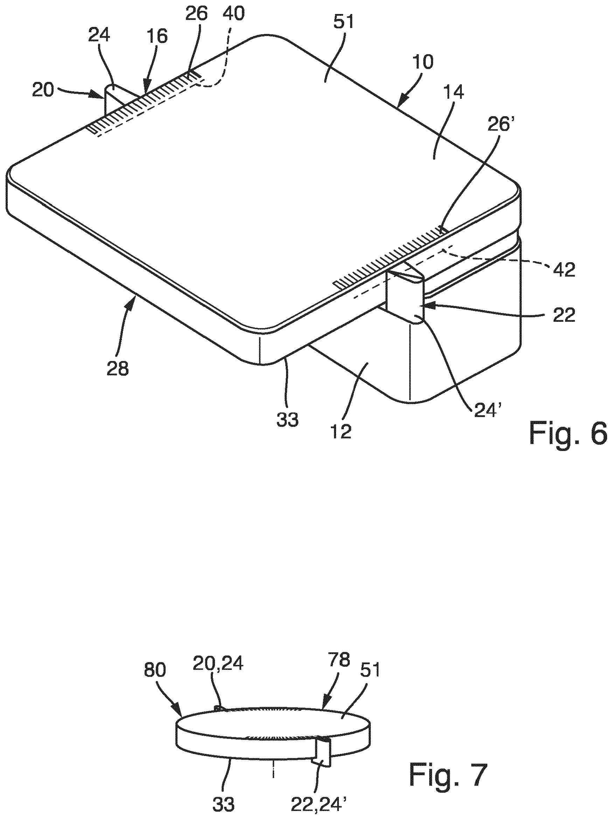

Die Bewegungsbahn 40, 42 kann auch geradlinig verlaufen; siehe Fig. 6.

Die Führungen 38 sind auf der Unterseite einer Wand 44 des Kopfteils 14 ausgebildet. Auf der Oberseite dieser Wand und somit im Innern des Kopfteils 14 sind Hall-Sensoren 46 stationär angeordnet. Eine erste Reihe 48 von Hall-Sensoren ist dem Temperaturschieber und eine zweite Reihe 50 von Hall-Sensoren 46 ist dem Durchflussschieber 22 zugeordnet.

Die Wand 44 ist hier an einem kreisringförmigen Führungselement 49 ausgebildet, welches umfangsseitig dichtend in eine obere Abdeckung 51 des Armaturengehäuses 10 eingesetzt ist. die obere Abdeckung weist einen die Oberseite bildenden, hier ebenen Abdeckplattenteil aus, von welchem umfangsseitig eine Mantelwand nach unten absteht. Mit dieser ist der Führungselement 49 dichtend verbunden, beispielsweise durch Kleben.

In der Fig. 3 ist der Temperaturschieber 20 in Kaltwasserstellung gezeigt. Ausgehend von dieser Stellung ist er im Uhrzeigersinn entlang der ersten Bewegungsbahn 40 verschiebbar, wobei sein Permanentmagnet 36 nacheinander mit den einzelnen Hall-Sensoren 46 der ersten Reihe 48 in Überlappung und somit in Zusammenwirkung gelangt. Der Bewegungsbereich des Temperaturschiebers 20 ist durch eine Nute 52 in der Wand 44 begrenzt, in welche Nute 52 ein Vorsprung des Temperaturschiebers 20 hineinragt. Befindet sich der Temperaturschieber 20 am von der Kaltwasserstellung entfernten Ende der ersten Bewegungsbahn 40, nimmt er die Warmwasserstellung ein. Zwischen diesen Endstellungen ist er von Hand hin und her verschiebbar und in Zwischenstellungen festsetzbar um eine Mischwassertemperatur anzuwählen.

Für den Durchflussschieber 22 trifft genau dasselbe zu. In der Fig. 3 ist der Durchflussschieber 20 in der Aus-Stellung gezeigt, das heisst es soll kein Wasser aus der Sanitärarmatur ausfliessen. Befindet sich der Durchflussschieber 22 (im Uhrzeigersinn) am andern Ende der zweiten Bewegungsbahn 42, befindet er sich in der Durchfluss-Maximumstellung. Zwischen diesen beiden Endstellungen ist der Durchflussschieber 22 hin und her bewegbar, um entsprechend der zweiten Reihe von Hall-Sensoren 46 den Wasserdurchfluss stufenartig einstellen zu können.

Die erste Reihe 48 von Hall-Sensoren 46 bildet einen ersten Sensor 54, welcher elektrische Temperatursignale in Abhängigkeit vom Ort beziehungsweise der Stellung des Temperaturschiebers 20 erzeugt und diese an eine elektronische Steuerung 56 über eine elektrische Leitung 58 abgibt.

Entsprechend bildet die zweite Reihe 50 von Hall-Sensoren 46 einen zweiten Sensor 60, welcher entsprechend dem Ort beziehungsweise der Stellung des Durchflussschiebers ein elektrisches Durchflusssignal erzeugt und dieses über die weitere elektrische Leitung 62 ebenfalls an die elektronische Steuerung 56 abgibt.

Den Strom für die Speisung der Hall-Sensoren 46 liefert hier die elektronische Steuerung 56. Die Regelung des Stromes für jeden der Hall-Sensoren 46 kann durch die elektronische Steuerung 56 und eine entsprechende Anzahl Speiseleitungen zu den Hall-Sensoren 46 erfolgen. Bevorzugt ist jedoch im Kopfteil 14 des Armaturengehäuses 10 eine schematisch angedeutete, elektronische Schaltung 64 vorhanden, welche von der Steuerung 56 gespiesen wird und welche jeden der Hall-Sensoren 46 mit dem bestimmten Strom speist.

Die Spannung der Hall-Sensoren 46, welche das Temperatursignal beziehungsweise das Durchflusssignal bestimmen, werden abgegriffen und vorzugsweise in der elektronischen Schaltung 64 verstärkt und dann über die Leitungen 58 beziehungsweise 62 der Steuerung 56 zugeführt.

In der Fig. 3 sind diese Leitungen und die elektronische Schaltung 64 nur schematisch angedeutet. Sie verlaufen von der elektronischen Steuerung 56 durch den Sockelteil 12 zum Kopfteil 14, welcher zu diesem Zweck Leitungsdurchlässe 66 aufweist.

Bevorzugt sind die Hall-Sensoren 46 und die entsprechenden elektrischen Leitungen sowie die elektronische Schaltung 46 auf einer Printplatte oder einem sogenannten Flexprint angeordnet, welcher in Kopfteil 14 eingelegt ist. Von diesen führt dann ein Kabel zur Steuerung 56.

Selbstverständlich ist die Wand 44 aus einem das Magnetfeld der Permanentmagnete 36 nicht beeinflussendem Material, vorzugsweise aus Kunststoff hergestellt.

Die elektronische Steuerung 56 steuert eine Ventilbatterie 68 an, welche allgemein bekannt ist. Sie weist einen Kaltwassereinlass 70, einen Warmwassereinlass 72 und einen Mischwasserauslass 74 auf. Letzterer ist über eine Mischwasserleitung 76, welche an den Leitungsanschluss 32 angeschlossen ist, mit dem Wasserauslauf 28 strömungsverbunden. Der Kaltwassereinlass 70 und der Warmwassereinlass 72 sind dazu bestimmt, mit einer Kaltwasserspeiseleitung beziehungsweise einer Warmwasserspeiseleitung verbunden zu sein.

Wie dies aus dem Dokument WO 2004/081300 A1 bekannt ist, weist die elektronische Steuerung 56 bevorzugt einen Prozessor auf, welcher mittels eines Computerprogramms die Ventilbatterie 68 derart steuert, dass die Temperatur und der Durchfluss des beim Wasserauslauf 28 die Sanitärarmatur verlassenden Wassers der Stellung des Temperaturschiebers 20 und des Durchflussschiebers 22 entspricht.

Während bei der in den Figuren 1 bis 5 gezeigten Ausführungsform der Temperaturschieber 20 und Durchflussschieber 22 entlang kreisbogenförmigen Bewegungsbahnen 40, 42 bewegt werden, ist in der Fig. 6 eine Ausführungsform der Sanitärarmatur gezeigt, bei welcher die erste Bewegungsbahn 40 und die zweite Bewegungsbahn 42 gradlinig verlaufen. Hier weist das Sockelteil 12 einen rechteckigen Querschnitt mit abgerundeten Ecken und der Kopfteil 14, in Draufsicht gesehen, eine quadratische Form mit abgerundeten Ecken auf. Auch hier ist der Wasserauslauf 28 auf der Unterseite des Kopfteils 14 vorgesehen. Der Aufbau und die Funktionsweise ist genau gleich wie weiter oben beschrieben, wobei die die erste Bewegungsbahn 40 und zweite Bewegungsbahn 42 definierenden Führungen 48 für die Temperaturschieber 20 und den Durchflussschieber 22 geradlinig ausgebildet sind und die erste Reihe 48 sowie zweite Reihe 50 der Hall-Sensoren 46 ebenfalls geradlinig verlaufen. Hier ist das Führungselement49 entsprechend quadratisch ausgebildet.

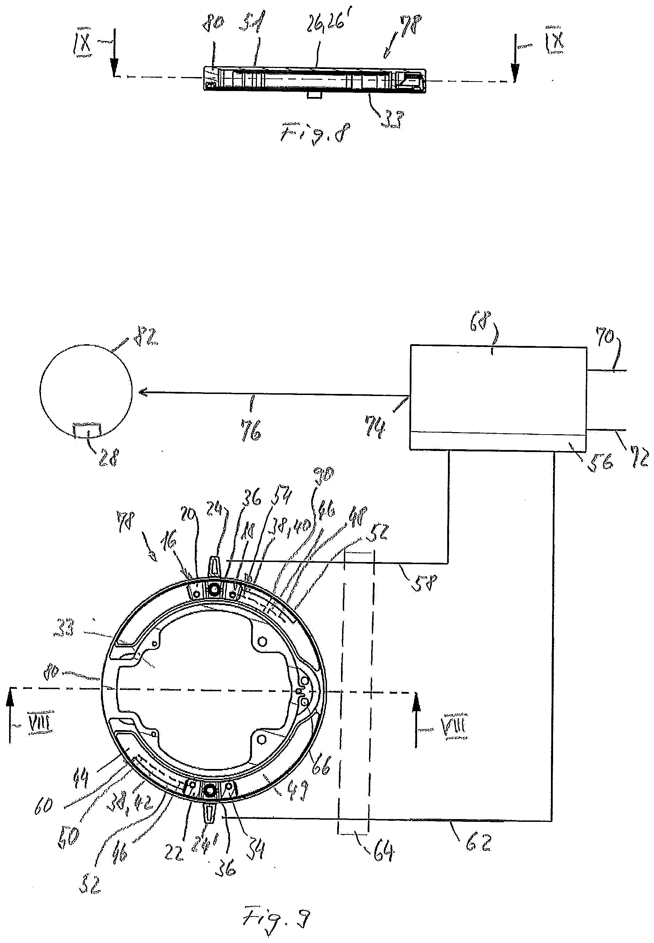

Eine weitere Ausführungsform der erfindungsgemässen Sanitärarmatur ist in den Figuren 7 bis 9 gezeigt. Die dem Kopfteil 14 entsprechende Bedieneinheit 78 weist ein separates Bediengehäuse 80 auf, welches analog dem Kopfteil 14, jedoch ohne Strömungselement 30 und Wasserauslauf 28 ausgebildet ist. Es weist die obere Abdeckung 51 mit der Mantelwand auf. Das Führungselement 49 ist umfangseitig, d.h. wie bei den andern Ausführungsformen mit der Mantelwand dichtend in die obere Abdeckung 51 eingesetzt. Die untere Abdeckplatte 33 schliesst das Bediengehäuse 80 dichtend unten ab.

Bei dieser Ausführungsform ist die Ventilbatterie 68 über die Mischwasserleitung 76 mit einem Wasserauslauf 28 verbunden, welcher in einem separaten, vom Bediengehäuse 18 getrennten Auslaufgehäuse 82 angeordnet ist. Im Bediengehäuse 80 befindet sich der Bedienteil 16 und die Sensoranordnung 18 in genau gleicher Art und Weise wie dies im Zusammenhang mit den Figuren 1 bis 5 beschrieben ist.

Der erste Sensor 54 und der zweite Sensor 60 sind ebenfalls über elektrische Leitungen 56, 62 mit der elektronischen Steuerung 56 verbunden, welche, wie weiter oben beschrieben, die Ventilbatterie 68 ansteuert.

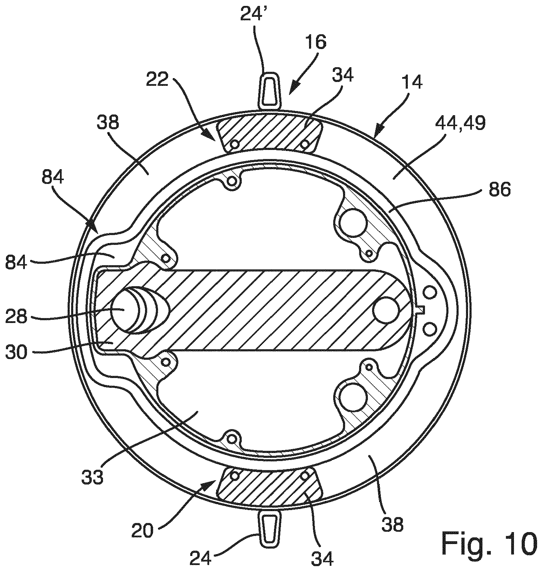

Wie dies Fig. 10 zeigt, weist das Führungselement 49 zwei, von der Wand 44 gegen unten abstehende und in einem gleichbleibenden Abstand zueinander verlaufende Wandelemente 84 auf, welche in sich geschlossen sind und einen Aufnahmekanal für ein in sich geschlossenes Dichtelement 86, welches bevorzugt als Flachdichtung ausgebildet ist, bildet.

Das Dichtelement 86 steht, im nicht zusammengepressten Zustand, über die Wandelemente 84 und somit den Aufnahmekanal vor. Beim Zusammenbau des Kopfteils 14 kommt das Dichtelement 86 an der unteren Abdeckplatte 33 zur Anlage und wird durch das zueinander Ziehen des Führungselements 49 und der unteren Abdeckplatte 33, beispielweise mittels Schrauben, zusammengepresst um Dichtwirkung zu entfalten.

Das Dichtelement 86 verhindert das Eindringen von Flüssigkeit und Schmutz in das Innere des Armaturengehäuses 10, insbesondere der Kopfteils 14, wo die Sensoranordnung 18 und gegebenenfalls die elektronische Schalung 64 angeordnet sind.

Das Dichtelement 86 verläuft bezüglich des Temperaturschiebers 20 und des Durchflussschiebers 22 sowie den zugeordneten Führungen 38 radial innen. Der Temperaturschieber 20 und Durchflussschieber 22 sind somit auf der der Umgebung zugewandten Aussenseite des Kopfteils 14 und somit des Armaturengehäuses 10 angeordnet.

Wie dies in Fig. 4 mit einer gestrichelten Linie angedeutet ist, ist es auch möglich, die Aus-Stellung 88 für den Durchflussschieber 22 wenigstens annähernd in der Längsmitte des Bewegungsbereichs des Durchflussschiebers 22 vorzusehen. Dies insbesondere bei einer Sanitärarmatur für Badewanne und Kopf- / Handbrause. Ausgehend von der Aus-Stellung 88 kann beispielsweise durch Bewegen des Durchflussschiebers 22 im Gegenuhrzeigersinn der Wasserdurchfluss für die Kopf- / Handbrause vergrössert werden, wobei der maximale Durchfluss erreicht ist, wenn sich der Durchflussschieber am betreffenden Ende des Bewegungsbereichs befindet. Entsprechend kann ausgehend von der Aus-Stellung 88 durch Bewegen des Durchflussschiebers 22 im Uhrzeigersinn der Wasserdurchfluss für die Badewanne vergrössert werden, wobei der maximale Durchfluss erreicht ist, wenn sich der Durchflussschieber am betreffenden Ende des Bewegungsbereichs befindet.

Bei dieser Ausführungsform ist es vorteilhaft, entsprechend der Aus-Stellung 88 ein Rastelement vorzusehen, dessen Kraft überwunden werden muss, um den Durchflussschieber 22 aus der Aus-Stellung 88 in die eine oder andere Richtung zu verschieben. Der Benutzer fühlt bei dieser Ausführungsform auch das Erreichen der Aus-Stellung 88.

Bei dieser Ausführungsform befindet sich bevorzugt bei der Aus-Stellung 88 kein Hall-Sensor 36 und sind dem Bewegungsbereich für die Kopf- / Handbrause sowie dem Bewegungsbereich für die Badewanne je einen Reihe von Hall-Sensoren 36 zugeordnet, wie dies weiter oben beschrieben ist.

Der Ventilbatterie 68 ist bei dieser Ausführungsform ein Umschaltventil zugeordnet, welches eingangsseitig an den Mischwasserauslass 74 angeschlossen ist und ausgangsseitig einerseits über eine Mischwasserleitung 76 mit dem an der Kopf- / Handbrause ausgebildeten Wasserauslauf 28 und andererseits über eine weitere Mischwasserleitung 76 mit dem an dem Badewannenauslauf ausgebildeten Wasserauslauf 28 verbunden ist.

Die elektronische Steuerung 56 steuert zusätzlich das Umschaltventil entsprechend der Position des Durchflussschiebers 22. Im Übrigen entsprechen der Aufbau und die Funktionsweise dieser Ausführungsform jenem beziehungsweise jener der weiter oben beschriebenen Ausführungsformen.

Auch hier ist es möglich, lineare Bewegungsbahnen 40, 42 für den Durchflussschieber 22 und den Temperaturschieber 20 vorzusehen.

Weiter ist es möglich, bei allen Ausführungsformen, bevorzugt bei der soeben Beschriebenen, eine Temperaturbegrenzung 90 vorzusehen. Dieser Temperaturbegrenzung 90 kann beispielsweise durch ein mechanisches Begrenzungselement gebildet sein, welches beispielsweise am Armaturengehäuse 10 oder an der Führung 38 des Temperaturschiebers 20 anbringbar ist, beispielsweise durch einrasten. Es begrenzt die Bewegung des Temperaturschiebers 20 über die gewünschte zulässige Temperatur hinaus.

Es ist auch möglich, den Temperaturbegrenzung 90 durch ein am Temperaturschieber 20 federnd angeordnetes Rastelement auszubilden, welches mit einer der gewünschten zulässigen Temperatur zugeordneten Vertiefung (oder Erhebung), beispielsweise in der Wand 44 zusammenwirkt. Dabei ist es denkbar, dass der Temperaturschieber 20 gewollt durch einen grösseren Kraftaufwand über die der gewünschten zulässigen Temperatur zugeordneten Stellung hinaus bewegbar ist.

Schlussendlich sei erwähnt, dass es auch möglich ist, die elektronische Steuerung 56 derart zu programmieren, dass Mischwasser mit maximal der gewünschten zulässigen Temperatur durch den Mischwasserauslass 74 ausfliessen kann. In diesem Fall ist der Temperaturbegrenzung 90 in die elektronische Steuerung 56 integriert.

Es ist auch möglich, eine Durchflussbegrenzung vorzusehen. Diese kann entsprechend der Temperaturbegrenzung 90 ausgebildet sein. Bei Integration des Durchflussbegrenzung in die elektronische Steuerung 56, steuert diese die Ventilbatterie 68 derart an, dass der Wasserdurchfluss auf den bestimmten maximalen Wert begrenzt ist.

Der Vollständigkeit halber sei erwähnt, dass selbstverständlich eine elektrische Energieversorgung vorhanden ist, um alle elektrischen und elektronischen Komponenten zu speisen. Diese kann beispielsweise über ein Netzgerät erfolgen, welches an die elektrische Gebäudeinstallation angeschlossen ist.

Selbstverständlich ist es auch denkbar, anstelle von Hall-Sensoren 46 andere allgemein bekannte Sensoren einzusetzen, um den Ort beziehungsweise die Stellung des Temperaturschiebers 20 und des Durchflussschiebers 22 zu erfassen und entsprechende elektrische Temperatursignale beziehungsweise Durchflusssignale zu erzeugen, welche der elektronischen Steuerung 56 zugeführt werden.

Die vorliegende Erfindung betrifft auch eine Bedieneinheit 78 und eine Sanitärarmatur mit einer Bedieneinheit 76 mit einem eine Sensorordnung 18 aufweisenden Bedienteil 16, wobei der Bedienteil 16 einen entlang einer ersten Bewegungsbahn 40 von Hand hin und her bewegbaren Temperaturschieber 20 sowie einen entlang einer zweiten Bewegungsbahn 42 von Hand hin und her bewegbarer Durchflussschieber 22 und Sensoranordnung 18 mit einem ersten Sensor 54, welcher in Abhängigkeit vom Ort beziehungsweise der Stellung des Temparaturschiebers 20 ein entsprechendes elektrisches Temperatursignal erzeugt, sowie einen zweiten Sensor 60, welcher in Abhängigkeit vom Ort beziehungsweise der Stellung des Durchflussschiebers 22 ein entsprechendes elektrisches Durchflusssignal erzeugt, aufweist.

Das Temperatursignal und das Durchflusssignal werden an eine elektronische Steuerung 56 abgegeben. Diese steuert eine Ventilbatterie 68.

Bevorzugt ist die Bedieneinheit nach einem der Ansprüche 2 bis 6 ausgebildet.

Bevorzugt weist die Bedieneinheit 78 ein Bediengehäuse 80 auf, in beziehungsweise an welchem der Bedienteil 16 angeordnet ist.

Wie in Fig. 7 mit gestrichelten Linien angedeutet, kann die Bedieneinheit 78 an einer Wand oder einer Unterlage, wie einem Tisch, befestigt werden.

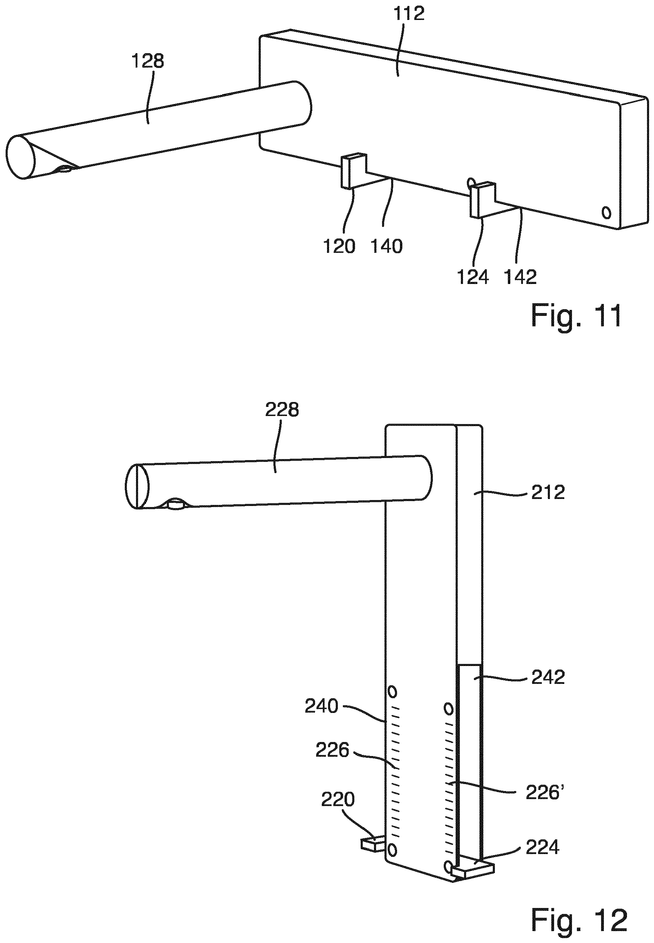

In den Figuren 11 und 12 sind zwei weitere Ausführungsbeispiele für Armaturen mit Temperatur- und Durchflussschiebern dargestellt. In Fig. 11 ist eine wandbefestigbare Armatur mit einem Sockelteil 112, einem Auslauf 128 sowie einem Temperaturschieber 120 und einem Durchflussschieber 124 gezeigt. Wesentlich ist hierbei, dass die Bewegungsbahn 140 des Temperaturschiebers 120 sowie die Bewegungsbahn 142 des Durchflussschiebers 124 beide in einer Linie an der Unterkante des Sockelteils 112 angeordnet sind.

Das in Fig. 12 gezeigte Ausführungsbeispiel zeigt eine Standarmatur, die beispielsweise auf einem Waschtisch, einer Küchenspüle oder einer Arbeitsplatte montiert werden kann. Der Sockelteil 212 ist hier als aufrecht stehende, kubische Säule ausgebildet, in deren oberem Bereich rechtwinklig der Auslauf 228 angeordnet ist. Seitlich, jeweils links und rechts an dem Sockelteil 212 befinden sich links der Temperaturschieber 220 und rechts der Durchflussschieber 224, die in entsprechenden Bewegungsbahnen 240, 242 auf und ab bewegbar angeordnet sind. Auf der Vorderseite des Sockelteils 212 ist jeweils eine Temperaturskala 226 und eine Durchflussmengenskala 226' aufgebracht. Charakteristisch bei diesem Ausführungsbeispiel ist einerseits die vertikale Bewegungsrichtung der Temperatur- und Durchflussschieber 220, 224, anderseits die symmetrische Anordnung an gegenüberliegenden Seiten des Sockelteils 212.

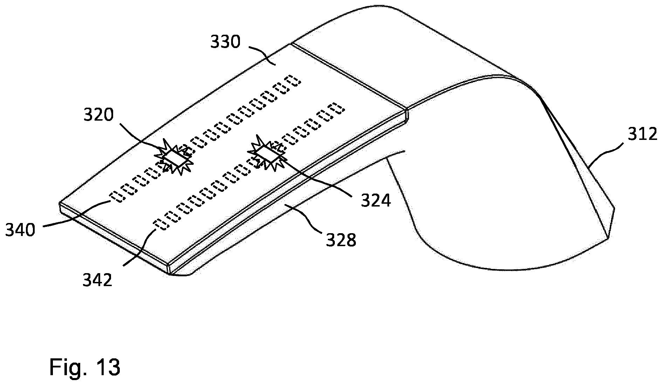

In Fig. 13 schließlich ist ein weiteres Ausführungsbeispiel für eine elektronisch betätigte Armatur gezeigt. Die Bedienung der Armatur erfolgt über virtuelle, also grafisch oder optisch dargestellte Bedienelemente 320, 324. Die Armatur hat einen geschwungenen Sockelteil 312, an den ein Auslauf 328 angeformt ist. Auf der Oberseite des Auslaufs 328 befindet sich eine Anzeige 330 mit integrierten Berührungssensoren.

Die Anzeige 330 ist in zwei virtuelle Bewegungsbahnen 340, 342 unterteilt, entlang denen jeweils eine Reihe Leuchtelemente wie beispielsweise LED's angeordnet sind. Zur Visualisierung eines virtuellen Bedienelements leuchtet jeweils eine LED entlang der jeweiligen Bewegungsbahn. Die leuchtende LED 320 der linken Bewegungsbahn 340 stellt hierbei einen Temperaturschieber dar, die leuchtende LED 324 der rechten Bewegungsbahn 342 einen Durchflussschieber.

Die Bedienung erfolgt in der Gestalt, dass ein Benutzer einen Finger auf die leuchtende LED 320, die den Temperaturschieber darstellt, oder die leuchtende LED 324, die den Durchflussschieber darstellt, legt und dann die jeweilige Leuchtanzeige entlang der Bewegungsbahn 340 bzw. 342 nach oben oder unten verschieben kann. Hierzu sind auf der Unterseite des Displays 330 kapazitive Berührungssensoren angeordnet, die eine Fingerberührung erkennen und über eine in der Anzeige 330 enthaltene Steuerschaltung die Leuchtelemente so ansteuern, dass die Leuchtanzeige einer Fingerbewegung entlang der Bewegungsbahn 340 bzw. 342 folgt. Es wird also immer das Leuchtelement angeschaltet, das sich gerade unter der Fingerkuppe befindet und das zuvor aktivierte Leuchtelement wird ausgeschaltet. Auf diese Weise kann mittels einer Berührungsgeste der virtuelle Temperaturschieber 320 entlang der Bewegungsbahn 340 nach oben oder unten geschoben werden um die Wassertemperatur zu erhöhen oder zu erniedrigen oder der virtuelle Durchflussschieber 324 entlang der Bewegungsbahn 342 nach oben oder unten geschoben werden, um den Volumenstrom des ausströmenden Wassers zu erhöhen oder zu verringern.

In ähnlicher Weise kann anstelle einer Anzeige mit diskreten Leuchtelementen ein sogenannter Touchscreen, also ein berührungsempfindliches Display verwendet werden, auf dem Grafiksymbole, die einen Durchflussschieber bzw. Temperaturschieber symbolisieren, auf vorgegebenen Bewegungsbahnen nach oben oder unten geschoben werden können.

## Patentansprüche

1. Sanitärarmatur mit einem Wasserauslauf (28), einer elektrisch gesteuerten Ventilbatterie (68) mit einem Kaltwassereinlass (70), einem Warmwassereinlass (72) und einem mit dem Wasserauslauf (28) strömungsverbundenen Mischwasserauslass (74), einem eine Sensoranordnung (18) aufweisenden Bedienteil (16) und einer elektronischen Steuerung (56), welche aufgrund von elektrischen Signalen der Sensoranordnung (18) die Ventilbatterie (68) ansteuert, wodurch Kaltwasser, Warmwasser oder Mischwasser mit einem gewünschten Durchflusswert und/oder mit einer gewünschten Temperatur dem Wasserauslauf (28) zugeführt wird,
**dadurch gekennzeichnet, dass**
der Bedienteil (16) einen entlang einer ersten Bewegungsbahn (40) hin und her bewegbaren Temperaturschieber (20) sowie einen entlang einer zweiten Bewegungsbahn (42) hin und her bewegbaren Durchflussschieber (22) und die Sensoranordnung (18) einen ersten Sensor (54), welcher in Abhängigkeit vom Ort des Temperaturschiebers (20) ein entsprechendes elektrisches Temperatursignal erzeugt, sowie einen zweiten Sensor (60), welcher in Abhängigkeit vom Ort des Durchflussschiebers (22) ein entsprechendes elektrisches Durchflusssignal erzeugt, aufweist und die Steuerung (56) aufgrund des Temperatursignals und des Durchflusssignals die Ventilbatterie (68) ansteuert.

2. Sanitärarmatur nach Anspruch 1, **dadurch gekennzeichnet, dass** der erste Sensor (54) sowie der zweite Sensor (60) je mindestens einen Hall-Sensor (46) und der Temperaturschieber (20) sowie der Durchflussschieber (22) je einen mit dem zugeordneten Hall-Sensor (46) zusammenwirkenden Permanentmagneten aufweisen.

3. Sanitärarmatur nach Anspruch 2, **dadurch gekennzeichnet, dass** der erste Sensor (54) sowie der zweite Sensor (60) mehrere Hall-Sensoren (46) aufweisen, welche jeweils in einer Reihe (48, 50) in Richtung der ersten beziehungsweise zweiten Bewegungsbahn (40, 42) hintereinander angeordnet sind und mit welchen der entsprechende Permanentmagnet (36) zusammenwirkt.

4. Sanitärarmatur nach Anspruch 2 oder 3, **gekennzeichnet durch** eine elektronische Schaltung (64), welche die Hall-Sensoren (46) mit einem definierten Strom speist und die Ausgangsspannung der Hall-Sensoren (46) verstärkt und als Temperatursignal beziehungsweise Durchflusssignal an die Steuerung (56) weiterleitet.

5. Sanitärarmatur nach einem der Ansprüche 1 bis 4, **dadurch gekennzeichnet, dass** der Bedienteil (16) eine Wand (44) aufweist, welche auf einer Seite die erste und die zweite Bewegungsbahn (40, 42) definierende Führungen (38) für den Temperaturschieber (20) und den Durchflussschieber (22) bildet, wobei der erste sowie der zweite Sensor (54, 60) auf der anderen Seite der Wand (44) angeordnet sind.

6. Sanitärarmatur nach Anspruch 5, **dadurch gekennzeichnet, dass** die Wand (44) in einer wenigstens annähernd horizontalen Ebene liegt und die Führungen (38) auf der Unterseite ausgebildet sind.

7. Sanitärarmatur nach einem der Ansprüche 1 bis 6, **gekennzeichnet durch** ein dem Wasserauslauf (28) und dem Bedienteil (16) gemeinsam zugeordnetes Armaturengehäuse (10).

8. Sanitärarmatur nach Anspruch 7, **dadurch gekennzeichnet, dass** das Armaturengehäuse (10) einen Sockelteil (12) sowie einen separaten, an diesem befestigten Kopfteil (16) aufweist, und dem Kopfteil (16) ein mit einer unteren Abdeckplatte (33) zusammenwirkendes, in sich geschlossenes Dichtelement (84) zugeordnet ist, welches das Eindringen von Flüssigkeit in das Innere des Kopfteils (16) verhindert, wobei die Sensoranordnung (18) auf der Innenseite des Kopfteils (16) und der Temperaturschieber (20) sowie der Durchflussschieber (22) auf der der Umgebung zugewandten Aussenseite des Kopfteils (16) angeordnet sind.

9. Sanitärarmatur nach einem der Ansprüche 1 bis 6, **dadurch gekennzeichnet, dass** das Armaturengehäuse (10) ein dem Wasserauslauf (28) zugeordnetes Auslaufgehäuse (82) und ein separates, dem Bedienteil (16) zugeordnetes Bediengehäuse (80) aufweist.

10. Sanitärarmatur nach Anspruch 9, **dadurch gekennzeichnet, dass** dem Bediengehäuse (80) ein mit einer unteren Abdeckplatte (33) zusammenwirkendes, in sich geschlossenes Dichtelement (84) zugeordnet ist, welches das Eindringen von Flüssigkeit in das Innere des Bediengehäuses (80) verhindert, wobei die Sensoranordnung (18) auf der Innenseite des Bediengehäuses (80) und der Temperaturschieber (20) sowie der Durchflussschieber (22) auf der der Umgebung zugewandten Aussenseite des Bediengehäuses (80) angeordnet sind.

11. Sanitärarmatur nach Anspruch 5 und einem der Ansprüche 6 bis 10, **dadurch gekennzeichnet, dass** die Wand (44) durch ein in eine obere Abdeckung (51) des Kopfteils (16) beziehungsweise Bediengehäuses (80), vorzugsweise umfangsseitig dichtend eingesetztes Führungselement (49) für den Temperaturschieber (20) und den Durchflussschieber (22) gebildet ist.

12. Sanitärarmatur nach Anspruch 5 und einem der Ansprüche 8 oder 10, **dadurch gekennzeichnet, dass** die Wand (44) durch ein in eine obere Abdeckung (51) des Kopfteils (16) beziehungsweise Bediengehäuses (80), vorzugsweise umfangsseitig dichtend eingesetztes Führungselement (49) für den Temperaturschieber (20) und den Durchflussschieber (22) gebildet ist und das Dichtelement (84) einerseits mit der unteren Abdeckplatte (33) und andererseits mit dem Führungselement (49) dichtend zusammenwirkt.

13. Sanitärarmatur nach einem der Ansprüche 1 bis 12, **gekennzeichnet durch** eine Temperaturbegrenzung (90) zum Verhindern des Ausfliessens von Mischwasser über einer vorbestimmten Temperatur und / oder eine Durchflussbegrenzung zum Begrenzen des Wasserdurchflusses auf einen vorbestimmten Wert.

14. Sanitärarmatur nach einem der Ansprüche 1 bis 13, **dadurch gekennzeichnet, dass** eine Aus-Stellung (88) des Durchflussschiebers (22) wenigstens annähernd in der Längsmitte der zweiten Bewegungsbahn (42) vorgesehen ist, der Durchflussschieber (22), ausgehend von der Aus-Stellung (88), in entgegengesetzte Richtungen bewegbar ist und die elektronische Steuerung (56), aufgrund des vom zweiten Sensor (60) erhaltenen Durchflusssignals, die Ventilbatterie (68) derart ansteuert, dass das Mischwasser dem einen oder andern von zwei Wasserausläufen (28) zugeführt wird.

15. Sanitärarmatur mit einem Wasserauslauf (28), einer elektrisch gesteuerten Ventilbatterie (68) mit einem Kaltwassereinlass (70), einem Warmwassereinlass (72) und einem mit dem Wasserauslauf (28) strömungsverbundenen Mischwasserauslass (74), einem eine Sensoranordnung (18) aufweisenden Bedienteil (16) und einer elektronischen Steuerung (56), welche aufgrund von elektrischen Signalen der Sensoranordnung (18) die Ventilbatterie (68) ansteuert, wodurch Kaltwasser, Warmwasser oder Mischwasser mit einem gewünschten Durchflusswert und/oder mit einer gewünschten Temperatur dem Wasserauslauf (28) zugeführt wird,
**dadurch gekennzeichnet, dass**
der Bedienteil mindestens eine optische Anzeige (330) zur Darstellung eines entlang einer ersten Bewegungsbahn (340) hin und her bewegbaren virtuellen Temperaturschiebers (320) sowie eines entlang einer zweiten Bewegungsbahn (342) hin und her bewegbaren virtuellen Durchflussschiebers (324) und die Sensoranordnung erste, entlang der ersten Bewegungsbahn angeordnete Berührungssensoren, welche Fingerberührungen erkennen, die dazu dienen, den virtuelle Temperaturschieber mittels einer ersten Berührungsgeste zu verschieben, und welche in Abhängigkeit vom einem Ort entlang der ersten Bewegungsbahn, an dem die erste Berührungsgeste endet, ein entsprechendes elektrisches Temperatursignal erzeugen, sowie zweite, entlang der zweiten Bewegungsbahn angeordnete Berührungssensoren, welche Fingerberührungen detektieren, die dazu dienen, den virtuellen Durchflussschieber mittels einer zweiten Berührungsgeste zu verschieben, und welche in Abhängigkeit vom einem Ort entlang der zweiten Bewegungsbahn, an der die zweite Berührungsgeste endet, ein entsprechendes elektrisches Durchflusssignal erzeugen, aufweist und die Steuerung (56) aufgrund des Temperatursignals und des Durchflusssignals die Ventilbatterie (68) ansteuert.

## Claims

1. Sanitary fitting having a spout (28), an electrically controlled valve mixer (68) having a cold water inlet (70), a hot water inlet (72) and a mixed water outlet (74) which is in fluidic communication with the spout (28), an operating element (16) having a sensor arrangement (18), and an electronic controller (56) which actuates the valve mixer (68) on the basis of electrical signals of the sensor arrangement (18), with the result that cold water, hot water or mixed water having a desired flow rate value and/or having a desired temperature is supplied to the spout (28),
**characterised in that**
the operating element (16) has a temperature slider (20), which is movable back and forth along a first path of movement (40), and a flow rate slider (22), which is movable back and forth along a second path of movement (42), and the sensor arrangement (18) has a first sensor (54) which, in dependence upon the location of the temperature slider (20), generates a corresponding electrical temperature signal, and a second sensor (60) which, in dependence upon the location of the flow rate slider (22), generates a corresponding electrical flow rate signal, and the controller (56) actuates the valve mixer (68) on the basis of the temperature signal and the flow rate signal.

2. Sanitary fitting according to claim 1, **characterised in that** the first sensor (54) and the second sensor (60) each have at least one Hall effect sensor (46), and the temperature slider (20) and the flow rate slider (22) each have a permanent magnet which co-operates with the associated Hall effect sensor (46).

3. Sanitary fitting according to claim 2, **characterised in that** the first sensor (54) and the second sensor (60) have a plurality of Hall effect sensors (46) which are in each case arranged in a row (48, 50) one after the other in the direction of the first and second paths of movement (40, 42), respectively, and with which the corresponding permanent magnet (36) co-operates.

4. Sanitary fitting according to claim 2 or 3, **characterised by** an electronic circuit (64) which feeds a defined current to the Hall effect sensors (46) and increases the output voltage of the Hall effect sensors (46) and transmits it to the controller (56) as a temperature signal or flow rate signal.

5. Sanitary fitting according to any one of claims 1 to 4, **characterised in that** the operating element (16) has a wall (44) which on one side forms guides (38) defining the first and second paths of movement (40, 42) for the temperature slider (20) and the flow rate slider (22), the first and second sensors (54, 60) being arranged on the other side of the wall (44).

6. Sanitary fitting according to claim 5, **characterised in that** the wall (44) lies in an at least approximately horizontal plane and the guides (38) are formed on the underside.

7. Sanitary fitting according to any one of claims 1 to 6, **characterised by** a fitting housing (10) assigned jointly to the spout (28) and the operating element (16).

8. Sanitary fitting according to claim 7, **characterised in that** the fitting housing (10) has a base part (12) and a separate head part (16) fixed thereto, and there is assigned to the head part (16) a self-contained sealing element (84) which co-operates with a lower cover plate (33), which sealing element prevents the penetration of fluid into the interior of the head part (16), wherein the sensor arrangement (18) is arranged on the inner side of the head part (16), and the temperature slider (20) and the flow rate slider (22) are arranged on the outer side of the head part (16) that faces towards the environment.

9. Sanitary fitting according to any one of claims 1 to 6, **characterised in that** the fitting housing (10) has a spout housing (82), which is assigned to the spout (28), and a separate control housing (80) which is assigned to the operating element (16).

10. Sanitary fitting according to claim 9, **characterised in that** the control housing (80) is assigned a self-contained sealing element (84) which co-operates with a lower cover plate (33), which sealing element prevents the penetration of fluid into the interior of the control housing (80), wherein the sensor arrangement (18) is arranged on the inner side of the control housing (80), and the temperature slider (20) and the flow rate slider (22) are arranged on the outer side of the control housing (80) that faces towards the environment.

11. Sanitary fitting according to claim 5 and any one of claims 6 to 10, **characterised in that** the wall (44) is formed by a guide element (49) for the temperature slider (20) and the flow rate slider (22), which guide element is installed in an upper cover (51) of the head part (16) or control housing (80), preferably installed sealingly around the circumference.

12. Sanitary fitting according to claim 5 and either one of claims 8 and 10, **characterised in that** the wall (44) is formed by a guide element (49) for the temperature slider (20) and the flow rate slider (22), which guide element is installed in an upper cover (51) of the head part (16) or control housing (80), preferably installed sealingly around the circumference, and the sealing element (84) co-operates sealingly on the one hand with the lower cover plate (33) and on the other hand with the guide element (49).

13. Sanitary fitting according to any one of claims 1 to 12, **characterised by** a temperature limiter (90) for preventing the outflow of mixed water above a predetermined temperature and/or a flow rate limiter for limiting the flow of water to a predetermined value.

14. Sanitary fitting according to any one of claims 1 to 13, **characterised in that** an off-position (88) of the flow rate slider (22) is provided at least approximately in the longitudinal centre of the second path of movement (42), the flow rate slider (22), starting from the off-position (88), is movable in opposite directions, and the electronic controller (56), on the basis of the flow rate signal received from the second sensor (60), actuates the valve mixer (68) in such a way that the mixed water is supplied to one or other of two spouts (28).

15. Sanitary fitting having a spout (28), an electrically controlled valve mixer (68) having a cold water inlet (70), a hot water inlet (72) and a mixed water outlet (74) which is in fluidic communication with the spout (28), an operating element (16) having a sensor arrangement (18), and an electronic controller (56) which actuates the valve mixer (68) on the basis of electrical signals of the sensor arrangement (18), with the result that cold water, hot water or mixed water having a desired flow rate value and/or having a desired temperature is supplied to the spout (28),
**characterised in that**
the operating element has at least one optical display (330) for displaying a virtual temperature slider (320), which is movable back and forth along a first path of movement (340), and a virtual flow rate slider (324), which is movable back and forth along a second path of movement (342), and the sensor arrangement has first touch sensors arranged along the first path of movement, which sensors recognise finger touches which serve to displace the virtual temperature slider by means of a first touch gesture, and which sensors, in dependence upon a location along the first path of movement at which the first touch gesture ends, generate a corresponding electrical temperature signal, and second touch sensors arranged along the second path of movement, which sensors detect finger touches which serve to displace the virtual flow rate slider by means of a second touch gesture, and which sensors, in dependence upon a location along the second path of movement at which the second touch gesture ends, generate a corresponding electrical flow rate signal, and the controller (56) actuates the valve mixer (68) on the basis of the temperature signal and the flow rate signal.

## Revendications

1. Robinetterie sanitaire comportant une sortie d'eau (28), une batterie de distributeurs à commande électrique (68) avec une entrée d'eau froide (70), une entrée d'eau chaude (72) et une sortie d'eau mitigée (74) reliée hydrauliquement à la sortie d'eau (28), une partie de manœuvre (16) présentant un agencement de capteurs (18) et un dispositif de commande électronique (56) qui commande la batterie de distributeurs (68) sur la base de signaux électriques de l'agencement de capteurs (18), de sorte que de l'eau froide, de l'eau chaude ou de l'eau mitigée est amenée à la sortie d'eau (28) avec une valeur de débit souhaitée et/ou à une température souhaitée,
**caractérisée en ce que**
la partie de manœuvre (16) présente un curseur de température (20) qui peut être déplacé dans un sens et dans l'autre le long d'un premier trajet de déplacement (40) ainsi qu'un curseur de débit (22) qui peut être déplacé dans un sens et dans l'autre le long d'un deuxième trajet de déplacement (42), et l'agencement de capteurs (18) présente un premier capteur (54) qui, en fonction de l'emplacement du curseur de température (20), génère un signal électrique de température correspondant, ainsi qu'un deuxième capteur (60) qui, en fonction de l'emplacement du curseur de débit (22) génère un signal électrique de débit correspondant, et le dispositif de commande (56) commande la batterie de distributeurs (68) sur la base du signal de température et du signal de débit.

2. Robinetterie sanitaire selon la revendication 1, **caractérisée en ce que** le premier capteur (54) et le deuxième capteur (60) présentent chacun au moins un capteur à effet Hall (46) et le curseur de température (20) et le curseur de débit (22) présentent chacun un aimant permanent qui coopère avec le capteur à effet Hall (46) associé.

3. Robinetterie sanitaire selon la revendication 2, **caractérisée en ce que** le premier capteur (54) et le deuxième capteur (60) présentent plusieurs capteurs à effet Hall (46) qui sont disposés les uns derrière les autres en une rangée (48, 50) dans la direction du premier, respectivement deuxième trajet de déplacement (40, 42) et avec lesquels l'aimant permanent (36) correspondant coopère.

4. Robinetterie sanitaire selon la revendication 2 ou 3, **caractérisée par** un circuit électronique (64) qui alimente les capteurs à effet Hall (46) avec un courant défini, amplifie la tension de sortie des capteurs à effet Hall (46) et la transmet au dispositif de commande (56) comme signal de température, respectivement signal de débit.

5. Robinetterie sanitaire selon l'une des revendications 1 à 4, **caractérisée en ce que** la partie de manœuvre (16) présente une paroi (44) qui forme d'un côté des guidages (38) pour le curseur de température (20) et le curseur de débit (22) qui définissent le premier et le deuxième trajet de déplacement (40, 42), le premier et le deuxième capteur (54, 60) étant disposés de l'autre côté de la paroi (44).

6. Robinetterie sanitaire selon la revendication 5, **caractérisée en ce que** la paroi (44) est située dans un plan au moins approximativement horizontal et les guidages (38) sont formés sur la face inférieure.

7. Robinetterie sanitaire selon l'une des revendications 1 à 6, **caractérisée par** un corps de robinetterie (10) qui est associé conjointement à la sortie d'eau (28) et à la partie de manœuvre (16).

8. Robinetterie sanitaire selon la revendication 7, **caractérisée en ce que** le corps de robinetterie (10) présente une partie socle (12) et une partie tête séparée (16) fixée à celle-ci, et à la partie tête (16) est associé un élément d'étanchéité fermé sur lui-même (84) qui coopère avec une plaque de recouvrement inférieure (33) et empêche la pénétration de liquide à l'intérieur de la partie tête (16), l'agencement de capteurs (18) étant disposé sur la face intérieure de la partie tête (16) et le curseur de température (20) ainsi que le curseur de débit (22) étant disposés sur la face extérieure de la partie tête (16) tournée vers l'environnement.

9. Robinetterie sanitaire selon l'une des revendications 1 à 6, **caractérisée en ce que** le corps de robinetterie (10) présente un boîtier de sortie (82) associé à la sortie d'eau (28) et un boîtier de manœuvre séparé (80) associé à la partie de manœuvre (16).

10. Robinetterie sanitaire selon la revendication 9, **caractérisée en ce qu'**au boîtier de manœuvre (80) est associé un élément d'étanchéité fermé sur lui-même (84) qui coopère avec une plaque de recouvrement inférieure (33) et qui empêche la pénétration de liquide à l'intérieur du boîtier de manœuvre (80), l'agencement de capteurs (18) étant disposé sur la face intérieure du boîtier de manœuvre (80) et le curseur de température (20) ainsi que le curseur de débit (22) étant disposés sur la face extérieure du boîtier de manœuvre (80) tournée vers l'environnement.

11. Robinetterie sanitaire selon la revendication 5 et l'une des revendications 6 à 10, **caractérisée en ce que** la paroi (44) est formée par un élément de guidage (49) pour le curseur de température (20) et le curseur de débit (22), lequel est inséré dans un couvercle supérieur (51) de la partie tête (16) ou du boîtier de manœuvre (80), de préférence de manière étanche périphériquement.

12. Robinetterie sanitaire selon la revendication 5 et l'une des revendications 8 ou 10, **caractérisée en ce que** la paroi (44) est formée par un élément de guidage (49) pour le curseur de température (20) et le curseur de débit (22), lequel est inséré dans un couvercle supérieur (51) de la partie tête (16) ou du boîtier de manœuvre (80), de préférence de manière étanche périphériquement, et l'élément d'étanchéité (84) coopère de manière étanche d'une part avec la plaque de recouvrement inférieure (33) et d'autre part avec l'élément de guidage (49).

13. Robinetterie sanitaire selon l'une des revendications 1 à 12, **caractérisée par** une limitation de température (90) pour empêcher la sortie d'eau mitigée au-dessus d'une température prédéterminée et/ou une limitation de débit pour limiter le débit d'eau à une valeur prédéterminée.

14. Robinetterie sanitaire selon l'une des revendications 1 à 13, **caractérisée en ce qu'**une position d'arrêt (88) du curseur de débit (22) est prévue au moins approximativement au centre longitudinal du deuxième trajet de déplacement (42), le curseur de débit (22) étant déplaçable, à partir de la position d'arrêt (88), dans des directions opposées et le dispositif de commande électronique (56) commandant la batterie de distributeurs (68), sur la base du signal de débit obtenu à partir du deuxième capteur (60), de telle sorte que l'eau mitigée soit amenée à l'une ou à l'autre de deux sorties d'eau (28).

15. Robinetterie sanitaire comportant une sortie d'eau (28), une batterie de distributeurs à commande électrique (68) avec une entrée d'eau froide (70), une entrée d'eau chaude (72) et une sortie d'eau mitigée (74) reliée hydrauliquement à la sortie d'eau (28), une partie de manœuvre (16) présentant un agencement de capteurs (18) et un dispositif de commande électronique (56) qui commande la batterie de distributeurs (68) sur la base de signaux électriques de l'agencement de capteurs (18), de sorte que de l'eau froide, de l'eau chaude ou de l'eau mitigée est amenée à la sortie d'eau (28) avec une valeur de débit souhaitée et/ou à une température souhaitée,
**caractérisée en ce que**
la partie de manœuvre présente au moins un affichage optique (330) pour représenter un curseur de température virtuel (320) qui peut être déplacé dans un sens et dans l'autre le long d'un premier trajet de déplacement (340) ainsi qu'un curseur de débit virtuel (324) qui peut être déplacé dans un sens et dans l'autre le long d'un deuxième trajet de déplacement (342), et l'agencement de capteurs présente des premiers capteurs de contact disposés le long du premier trajet de déplacement, qui détectent des contacts de doigts qui servent à déplacer le curseur de température virtuel au moyen d'un premier geste de contact et qui, en fonction d'un emplacement le long du premier trajet de déplacement auquel le premier geste de contact se termine, génère un signal électrique de température correspondant, ainsi que des deuxièmes capteurs de contact disposés le long du deuxième trajet de déplacement, qui détectent des contacts de doigts qui servent à déplacer le curseur de débit virtuel au moyen d'un deuxième geste de contact et qui, en fonction d'un emplacement le long du deuxième trajet de déplacement auquel le deuxième geste de contact se termine, génère un signal électrique de débit correspondant, et le dispositif de commande (56) commande la batterie de distributeurs (68) sur la base du signal de température et du signal de débit.
